# EUROPEAN PATENT SPECIFICATION

(11) **EP 1 785 743 B1**
(45) Date of publication and mention of the grant of the patent: **05.10.2011**
(21) Application number: 05110533.6
(22) Date of filing: 09.11.2005
(51) Int. Cl.: G01S 13/78, G01S 13/86

(54) **Multi-Sensor System**
Multisensorsystem
Système à capteurs multiples

(43) Date of publication of application: 16.05.2007
(73) Proprietor: SAAB AB, 581 88 Linköping (SE)
(72) Inventor: Axelsson, Leif, 589 35 Linköping (SE); Ivansson, Johan, 582 16 Linköping (SE); Wallenberg, Jan, 589 51,Linköping (SE)
(74) Representative: Bengtsson, Peggy Katrin

(56) References cited:
- US-A- 4 050 068
- US-A- 5 170 168
- US-A- 5 652 588
- US-B1- 6 249 589

## Description

### Field of invention

The present invention refers to a multi-sensor system for use e.g. in reconnaissance or fighter aircraft. In particular it refers to such systems having both a radar sensor and a sensor providing an electro-optical image, such as IR or video.

### Background

A defence aircraft, or other aircraft for special missions, can be equipped with a number of different sensors, where each sensor has properties of its own. For example:
- A radar is good at searching for objects on the surface or in the air. When the radar finds an object, this is presented to the pilot as an echo or a track.
- An LDP (Laser Designator Pod) is capable of mediating a high definition image (IR or visual) to the pilot very well, but lacks the ability to search for objects in the image. In prior art systems this problem is solved by having the pilot to manually pointing out the object in the image that is to be followed by an internal LDP tracking function.

Therefore, it is an object of the present invention to provide a solution to the above mentioned problem, i.e. to alleviate the disadvantage of prior art of loading the pilot with the task of having to manually point out objects.

US 6,249,589 B1 discloses a device for passive friend-or-foe discrimination of targets, in particular airborne targets, wherein a target to be identified is observed by a video camera. The video camera is mounted for rotation about two mutually orthogonal axes and is aligned with the target with the aid of a servo or follow-up device controlled by target radiation.

EP 0 528 077 A1 shows a camera that is directed towards detected targets with the aid of radar.

In US 6,414,712 B1 a camera is directed towards detected targets with the aid of radar.

### Summary of the invention

The present invention concerns an avionics system comprising a radar system and an optical image producing system, a radar monitor and an optical image monitor, the radar system comprising one or more target tracking units, capable of automatic radar target tracking, and where the avionics system is provided with a decision support unit connected to the radar system and said optical image producing system, the decision support unit being connected to means for entering one or more decision parameters, such that, during a flight mission, said decision support unit can receive one or more automatic radar tracking parameters from the radar system, use said decision parameters on said radar tracking parameters to decide upon which radar target(s) to be subjected to observation by the optical image producing system.

Further, the decision support unit is connected to an IFF unit, and the decision support unit is provided with means for receiving IFF status for at least one radar target from said IFF unit, said decision support unit is provided with means for deciding that a radar target having IFF status "Friend" may not be subjected to observation by the optical image producing system, and said decision support system is also provided with means for deciding that a radar target having IFF status "Unknown" may be subject to observation by said optical image producing system.

The decision support unit is provided with means for communicating a value representative of a calculated direction of a radar target to the optical image producing system, said image producing system being provided with a camera being rotatable about two mutually orthogonal axes, and where said optical image producing system is provided with means to align the camera in the direction indicated by said value representative of said calculated direction.

The decision support unit may further be provided with means for deciding if a radar target is moving.

Still further, the decision support unit comprises means for predicting at least one target position with regard to target speed and target direction.

The decision support system comprises means for generating and sending a lock-command to the image producing system, such that said image producing system, which system is provided with means for contrast tracking, can start such tracking.

The present invention in particular concerns an avionics system where the image producing system is an LDP.

### Brief description of the drawings

- Fig. 1: shows an avionics multi-sensor system according to an embodiment of the present invention.
- Fig. 2: shows a flowchart describing a method for target and sensor handling in the multi-sensor system of fig. 1.

### Detailed description of preferred embodiments

For the purpose of the present application the following definitions are used
Sensor: A unit capable of sensing radiations, reflexions, or emissions from the environment, in particular from moving objects. Examples of sensors are
radars, IR-cameras, TV-cameras.
LDP: An LDP (Laser Designator Pod) is a unit comprising a laser range finder and an electro-optic sensor that can take images of the environment,
EO-sensor: Electro-optic sensor, e.g. an IR- or TV-camera.
LDP tracking function: A function within an LDP using contrast differences in a current image of the LDP electro-optic sensor to follow an object and continuously direct the camera such that the object appears in the middle of the image.
Target tracking: The act of following an object and updating target direction and/or position data and/or motion data by associating new sensor readings to target data.
Quick search program: A method within a radar system for searching a volume of air.
Designate: The act of deciding that a sensor reading is an object of interest and give it a designation, e.g. an alphanumeric code. Object database space is usually also allocated and sensor data is stored.
Direct a sensor: The act of ordering a sensor to take up sensor readings from a desired direction. The ordering can be effected by communicating a signal to the sensor representative of the desired direction.'
Radar search mode: A mode within a radar system comprising that a volume of air is scanned for finding new objects.
Object type: One of "friend" or "unknown"
Target recognition: The act of determining the object type of a target.
Prioritize: The act of deciding that one object is more important than others.
Sensor data fusion: The act of deciding that readings from two different sensors originate from the same object. The term also to apply to statistical methods on said readings for improving data quality.
Decision support system: A system or function within a (computerised) system for helping a person to make fast an correct decisions, or doing them for her or him, normally with the aim of reducing the cognitive load on that person.
Identification: The act of determining the identity of an object.
Identity: Usually the nationality and identification code of an object and/or name of pilot and/or purpose of mission.
Jumping: A function within a radar system for decreasing the time between two consecutive scannings of a certain volume of air.
Object database: A database containing data on one or more objects, e.g sensor readings.

In prior art systems, when delivering a laser-guided weapon, the LDP is usually directed towards a target point automatically by means of an estimated position entered in advance or manually. In this case, the pilot is able to identify the target. In all other cases, the pilot himself/herself, from an LDP image, has to find objects for identification, e.g. when performing robot attacks towards surface ships or in the air in case of rejection missions. Prior art LDPs are lacking a function corresponding to the radar search function, and the pilot himself/herself has to control the direction in which the LDP is looking. Also, prior art systems has not the ability to (automatically) determine which type of object it is following.

A solution to the problem according to the present invention comprises the introduction of a recognition mode in the avionics system for the LDP, preferably realised with the aid of one or more electronics or software units. The recognition mode is devised to be a special state of the avionics system in which, when activated, certain things will happen in a certain way as will be explained below. The recognition mode can be activated by the pilot, either via the mission or via data link. Subsequent to the recognition mode being activated, the LDP is arranged to be automatically directed towards a target which is already being tracked by the radar. The LDP can also be automatically directed towards a target position transferred via data link. The recognition mode is devised to comprise a number of submodes. Each submode is devised to take care of a certain kind of recognition function.

A number of cases are described below.
■ *Recognition in air target mode.*
   - In quick search programs the LDP is arranged to automatically look in a direction provided from the radar when tracking is started and automatic designation is ordered, i.e. the LDP is ordered to track the target. This mode can be used e.g. during rejection missions. An image of the object is presented to the pilot and may also be stored away.
   - When the radar is in search mode, targets fulfilling the criteria for being subjected to recognition efforts (e.g. distance less than certain value, no IFF answer) will automatically be prioritized, and the LDP will automatically be ordered to track a target in the direction provided by the radar. Automatic directioning is also ordered. An image of the object is presented to the pilot and may also be stored. The image is presented on the LDP monitor.
■ *LDP being directed towards an object via data link.*
   Because the number of LDPs is limited, co-operation between aircrafts may be an option. When a group of aircrafts discover an object a direction command is sent via data link to an aircraft in the group carrying an LDP. The LDP automatically performs recognition action on the object i.e. takes a surveillance image.
■ *Surveillance image via mission*: The LDP is directed towards surveillance areas in advance.
■ *Recognition of surface targets*: Most prior art radar systems do not start target tracking of surface targets automatically. Instead, the pilot prioritizes echoes, which entails radar target tracking of the object. In a system of a preferred embodiment, the radar will commence tracking automatically, which entails that the pilot does not have to prioritize the objects. Thus reducing the cognitive load. The embodiment comprises a function similar to the one described in item 1 above also for ground targets.

When the LDP is tracking an object, LDP target data are fused with target data from other sensors, which could entail better target data for the sensor system as a whole.

### Recognition in air target mode

### Target recognition with the aid of the quick search program of the radar

There are a number of quick search programs. They all have in common that they search through a certain volume of air, having a start point in a certain direction. The radar looks on the first detected target, i.e. the radar commences continuous tracking (CT) on the first detected target. Below is a short description of the process.
1. The pilot selects the desired target recognition mode, in this case "Aided by quick search".
2. The pilot orders the radar into quick search mode.
3. The radar locks on target and tracks said target continuously. Direction and distance to the target is sent continuously to a decision support unit of the multisensor system.
4. The decision support unit continuously predict the direction to a target with respect to estimated target speed and estimated target direction, and continuously directs the LDP towards the predicted target direction. From this moment on, an image will be presented to the pilot. If desirable, images can also be recorded.
5. The decision support unit sends a locking command to the LDP when the LDP is directed to the target, said locking command orders the LDP to lock on nearest marked contrast and to start tracking. The LDP starts such contrast tracking of the nearest marked contrast in an image taken in the ordered direction. When the LDP has started target tracking, a release command is sent to the radar which can do something else, e.g. search for another object.

### Target recognition when the radar is in search mode

When the radar is in search mode, it looks for a target. When a target is detected, the radar automatically starts tracking of said target. Target tracking performance e.g. direction accuracy, may not be sufficiently good for directing the LDP. Below is a short description of an automatic identification/recognition function in this mode.
1. The pilot activates/selects the recognition mode for the LDP, in this case "Aided by radar search mode".
2. The radar is already in, or is set into search mode and is or begins tracking one or more targets.
3. A situation analysis unit, SIA which is devised as being a subunit of the decision support unit, continuously monitors every target/threat. If any of the targets tracked by the radar fulfils a distance criterion, i.e. the distance at which identification/recognition is possible, and the target is not a friend as decoded by the IFF-system, the situation analysis unit automatically prioritizes the target.
4. When a target has been automatically prioritized by the situation analysis unit, priority information for said target is sent to the radar. This entails the radar switching to automatic tracking of this target, i.e. the radar will do continuous "jumps" (short KF max X sec) to improve the tracking quality (direction accuracy).
5. When the tracking/following quality is sufficiently good, as judged by the situation analysis unit by statistical analysis or other suitable method, the LDP is directed towards the target. Subsequently when the EO-sensor of the LDP is aligned in the ordered direction, a lock-command is sent to the LDP, upon which command the LDP subsequently commences contrast tracking. Target data from radar and LDP may in a further embodiment be fused, to achieve better target data quality.
6. The image from the LDP is presented to the pilot and/or is registered/recorded.
7. Subsequently to LDP start of target tracking, it is possible by the radar to automatically prioritize off the radar tracked target, under which circumstances the radar returns to ordinary tracking of the target. Target data from radar and LDP may in a further embodiment still be fused.
8. When the pilot is satisfied, he stops the LDP tracking and the procedure is started for a new target that complies with the predetermined conditions.

In an alternative embodiment the items 4 and 7 is instead:
4. When the target is automatically prioritized, the radar is ordered to make single separate "jumps" (short continuous tracking max X seconds) to improve tracking quality (position and velocity accuracy). As the radar in this case has not started the prioritized tracking, there is no need for item 7. This function will also work when the pilot himself/herself manually would like to prioritize the radar targets.

### Applications

It is worth mentioning the following applications:
- Target recognition of an object before weapon delivery and supply of improved position data to the weapon or weapon system. The recognition can be performed at a distance much larger than what is possible for prior art systems. The time required for detection, recognition and weapon delivery will be considerably shorter.
- Recognition of aircraft at rejection missions. In many prior art systems, the recognition takes place when the pilot is viewing the object. If automatic direction of the LDP is performed, the recognition can take place even when the target is several kilometres away.
- Recognition of warships among civil ships.

### Description of the system

A system according to a preferred embodiment of the invention comprises four sensors as stated below:
- An LDP, which is an electro-optic sensor taking images of the environment. The sensor has the ability to track an object with the aid of contrast in the image. The LDP supplies images to a presentation system and position data to a central computer or the like.
- A radar that ranges objects with good position and velocity accuracy and sometimes the radar also can identify an object.
- An IFF subsystem that transmit questions to objects in the environment by means of radio signals. Objects being friends and that possess a transponder reply with a certain signal. Therefore, the system is able to decide if an object is a friend or unknown. An object is considered unknown if no reply is given within a certain time or if a wrong reply is given.
- A radar warning receiver ranges the radars of other objects, and is also capable of identifying/recognising an object.

The system also comprises a decision support unit having a situation analysis subunit. Sensor data from all sensors are sent to the central computer. The decision support system, which system may be a part of, or a subsystem of, the central computer, collects, fuses, analyses and performs an action or recommends an action to the pilot. Data on all known objects are stored in an object database comprising identified and unidentified objects. When a person in command, e.g the pilot, want to take an action towards an object, e.g. weapon delivery, the object must be identified first, to avoid mistakenly bringing down innocent people.

The following takes place in the system when the system is in recognition mode:
- The decision support system looks in the object data storage if there are unidentified objects within the range of the EO-sensor of the LDP. The decision support system orders the radar to range on the object. When position and velocity data on the object are good enough the LDP is directed in the direction of the object.
- The decision support system orders the LDP to track the object and the image is shown on the presentation surface.
- When the pilot has identified the object from the presented image or otherwise, he orders stopping of the LDP tracking and the next unidentified object is treated.

The following takes place when the system is in reconnaissance mode:
- The decision support system directs the LDP towards all unidentified objects and an image is taken of each object.
- In this mode, it is also possible for other aircrafts to use the LDP by requesting a reconnaissance image to be taken of a desired object and by sending the position of the desired together with the request.

### Advantages

In prior art systems, the pilot is required to direct the LDP which entails him to first manually find the object. A system according to an embodiment of the present invention may provide the following advantages:
- Automatic directing and recognition/identification of boats in crowded scenarios.
- Automatic directing and recognition/identification of aircrafts at rejection missions or before weapon delivery.
- Automatic reconnaissance images.
- Improved target position estimates during LDP tracking.

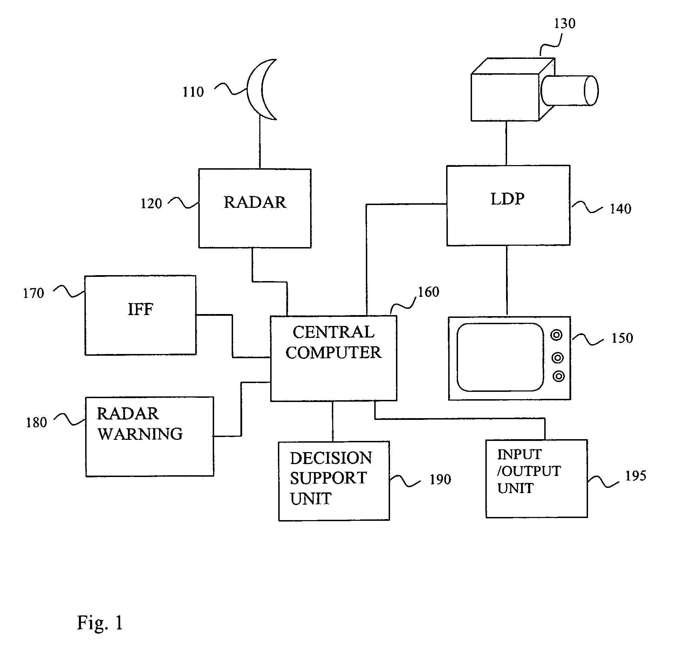

Fig. 1 is a schematic view of a multi-sensor system comprising a radar having a radar antenna 110 and a radar data processing unit 120. The radar data processing unit 120 is connected to a central computer 160. A Laser Designator Pod system 130, 140, 150 comprising an optical sensor 130, e.g. an infrared video camera 130, an LDP data processing unit 140 and a monitor 150 is also connected to said central computer 160. To the central computer 160 is further connected an IFF-unit 170 and a radar warning unit 180. Connected to the central computer is also a decision support unit 190. Said decision support unit is provided with a situation analysis unit (not shown).

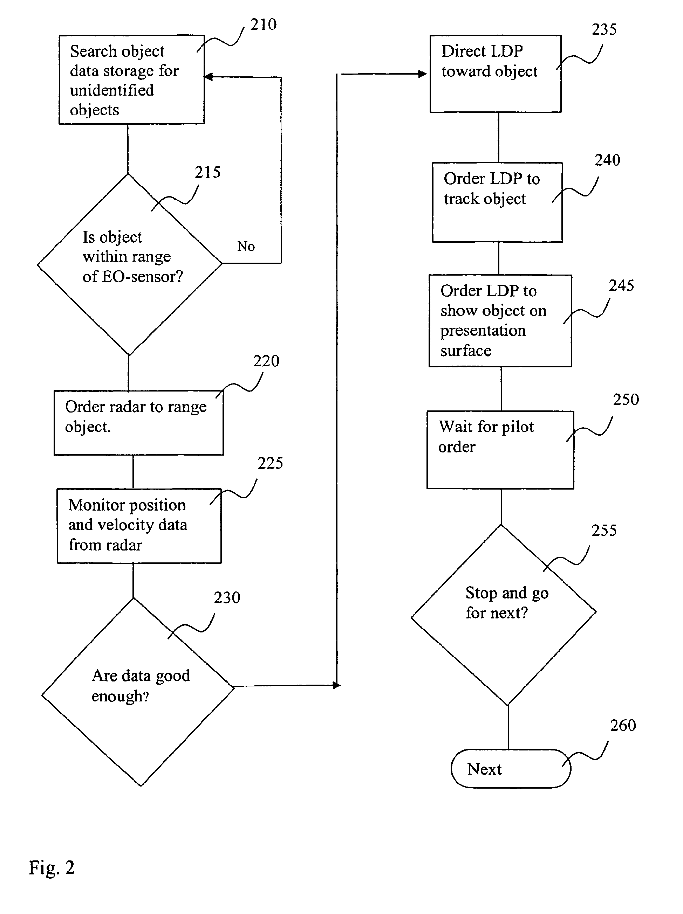

Fig. 2 shows a flowchart describing a method for target and sensor handling in the multi-sensor system of fig. 1. The method comprises the steps of
- Searching 210 in an object data storage of the central computer 160 to see if 215 there are unidentified objects within the range of the EO-sensor 130 of the LDP.
- Ordering 220 the radar to range on the object.
- Monitoring 225 position and velocity data on the object
- Decide 230 when said data are good enough, and then direct 235 the LDP in the direction of the object.
- Ordering 240 the LDP to track the object and show 245 the image of the tracked object on a presentation surface.

The method may also comprise the step of
- Upon pilot command, stop LDP tracking and continue 260 to treat the next unidentified object.

## Claims

1. An avionics system comprising a radar system (110), (120) and an optical image producing system (130), (140), (150), a radar monitor and an optical image monitor (150), said radar system being capable of automatically tracking a radar target, **characterised in that** said avionics system is provided with a decision support unit (190) having a connection to said radar system and to said optical image producing system (130), (140), (150), said decision support unit (190) being connected to an input/output unit (195) for entering one or more decision parameters, and where, during a flight mission, said decision support unit (190) is devised to receive one or more automatic radar tracking parameters from the radar system (120), use said decision parameters on said radar tracking parameters to decide upon which radar target(s) to be subjected to observation by the optical image producing system (130), (140), (150), and where the decision support unit (190) also is connected to an IFF unit (170), and **in that** said decision support unit (190) is provided with means for receiving IFF status for at least one radar target from said IFF unit (170), said decision support unit (190) being provided with means for deciding that a radar target having IFF status "Friend" should not be subjected to observation by the optical image producing system, and said decision support system (190) is provided with means for deciding that a radar target having IFF status "Unknown" should be subject to observation by said optical image producing system.

2. The avionics system of claim 1, **characterised in that** said decision support unit is provided with means for communicating a value representative of a calculated direction of a radar target to the optical image producing system, said image producing system being provided with a camera being rotatable about two mutually orthogonal axes, and said optical image producing system is provided with means to align the camera in the direction indicated by said value representative of said calculated direction.

3. The avionics system of claim 2, **characterised in that** said decision support unit is provided with means for deciding if a radar target is moving.

4. The avionics system of claim 3, **characterised in that** said decision support unit comprises means for predicting at least one target position with regard to target speed and target direction.

5. The avionics system of claim 4, **characterised in that** said decision support system comprises means for generating and sending a lock-command to the image producing system.

6. The avionics system according to any of the previous claims **characterised in that** the image producing system is a Laser Designator Pod.

7. A method for controlling the viewing direction of an electro-optic sensor within an avionics system comprising a radar system (110), (120) and an optical image producing system (130), (140), (150), a central computer (160), a radar monitor and an optical image monitor (150), said radar system being capable of automatically tracking a radar target, comprising the steps of:
- Searching (210) in an object data storage of the central computer (160) to see (215) if there are unidentified objects within the range of the electro-optic-sensor (130) of a Laser Designator Pod;
- Ordering (220) the radar to range on the object;
- Monitoring (225) position and velocity data on the object;
- Decide (230) when said data are good enough, and then direct (235) the Laser Designator Pod in the direction of the object, and
- Ordering (240) the Laser Designator Pod to track the object and show (245) the image of the tracked object on a presentation surface,
wherein the method also comprises the steps of :
- receiving IFF status for at least one radar target from an IFF unit (170);
- deciding, using a decision support unit (190) connected to the IFF unit (170), that a radar target having IFF status "Friend" should not be subjected to observation by the optical image producing system (130);
- deciding, using the decision support unit that a radar target having IFF status "Unknown" should be subject to observation by said optical image producing system (130)

8. A computer software product for realising the method of claim 7.

## Patentansprüche

1. Avioniksystem, enthaltend ein Radarsystem (110), (120) und ein optisches Bilderzeugungssystem (130), (140), (150), einen Radarmonitor und einen optischen Bildmonitor (150), wobei das Radarsystem in der Lage ist, ein Radarziel automatisch zu verfolgen, **dadurch gekennzeichnet, dass** das Avioniksystem mit einer Entscheidungshilfeeinheit (190) ausgestattet ist, die eine Verbindung zu dem Radarsystem und zu dem optischen Bilderzeugungssystem (130), (140), (150) hat, wobei die Entscheidungshilfeeinheit (190) mit einer Eingabe-/Ausgabeeinheit (195) zum Eingeben wenigstens eines Entscheidungsparameters verbunden ist und während eines Fluges die Entscheidungseinheit (190) dazu angewiesen wird, wenigstens einen automatischen Radarverfolgungsparameter von dem Radarsystem (120) zu empfangen, diese Entscheidungsparameter auf die Radarverfolgungsparameter anzuwenden um zu entscheiden, welches Radarziel / welche Radarziele Gegenstand einer Beobachtung durch das optische Bilderzeugungssystem (130), (140), (150) sein soll/sollen, und die Entscheidungshilfeeinheit (190) zudem mit einer IFF-Einheit (170) verbunden ist, und dadurch, dass die Entscheidungshilfeeinheit (190) mit einer Einrichtung zum Empfangen eines IFF-Status' für wenigstens ein Radarziel von der IFF-Einheit (170) ausgestattet ist, wobei die Entscheidungshilfeeinheit (190) mit einer Einrichtung ausgestattet ist, die entscheidet, dass ein Radarziel, das den IFF-Status "Freund" hat, nicht Gegenstand einer Beobachtung durch das optische Bilderzeugungssystem sein soll, und das Entscheidungshilfesystem (190) mit einer Einrichtung ausgestattet ist, die entscheidet, dass ein Radarziel, das den IFF-Status "Unbekannt" hat, Gegenstand einer Beobachtung durch das optische Bilderzeugungssystem sein soll.

2. Avioniksystem nach Anspruch 1, **dadurch gekennzeichnet, dass** die Entscheidungshilfeeinheit mit einer Einrichtung zum Übermitteln eines Wertes ausgestattet ist, der für eine berechnete Richtung eines Radarziels für das optische Bilderzeugungssystem repräsentativ ist, wobei das Bilderzeugungssystem mit einer Kamera ausgestattet ist, die um zwei zueinander orthogonale Achsen drehbar ist, und das optische Bilderzeugungssystem mit einer Einrichtung zum Ausrichten der Kamera in die Richtung ausgestattet ist, die durch den Wert angezeigt ist, der für die berechnete Richtung repräsentativ ist.

3. Avioniksystem nach Anspruch 2, **dadurch gekennzeichnet, dass** die Entscheidungshilfeeinheit mit einer Einrichtung zum Entscheiden ausgestattet ist, ob sich das Radarziel bewegt.

4. Avioniksystem nach Anspruch 3, **dadurch gekennzeichnet, dass** die Entscheidungshilfeeinheit eine Einrichtung enthält, die wenigstens eine Zielposition im Hinblick auf die Zielgeschwindigkeit und die Zielrichtung vorhersagt.

5. Avioniksystem nach Anspruch 4, **dadurch gekennzeichnet, dass** das Entscheidungshilfesystem eine Einrichtung zum Erzeugen und Senden eines Lock-Befehls an das Bilderzeugungssystem enthält.

6. Avioniksystem nach einem der vorhergehenden Ansprüche, **dadurch gekennzeichnet, dass** das Bilderzeugungssystem ein Laser Designator Pod ist.

7. Verfahren zum Steuern der Sichtrichtung eines elektrooptischen Sensors innerhalb eines Avioniksystems, enthaltend ein Radarsystem (110), (120) und ein optisches Bilderzeugungssystem (130), (140), (150), einen zentralen Computer (160), einen Radarmonitor und einen optischen Bildmonitor (150), wobei das Radarsystem in der Lage ist, ein Radarziel automatisch zu verfolgen, wobei das Verfahren folgende Schritte umfasst:
- Suchen (210) in einem Objektdatenspeicher des zentralen Computers (160) um festzustellen (215), ob es nicht identifizierte Objekte innerhalb des Bereiches des elektrooptischen Sensors (130) eines Laser Desginator Pods gibt;
- Anweisen (220) des Radars, sich auf das Objekt auszurichten;
- Überwachen (225) der Positions- und Geschwindigkeitsdaten des Objektes;
- Entscheiden (230), wann die Daten gut genug sind, und anschließendes Richten (235) des Laser Designator Pods in die Richtung des Objektes, und
- Anweisen (240) des Laser Designator Pods, das Objekt zu verfolgen und das Bild des verfolgten Objektes auf einer Darstellungsfläche zu zeigen (245),
wobei das Verfahren zudem folgende Schritte umfasst:
- Empfangen des IFF-Status' für wenigstens ein Radarziel von einer IFF-Einheit (170);
- Entscheiden mit Hilfe einer Entscheidungshilfeeinheit (190), die mit der IFF-Einheit (170) verbunden ist, dass ein Radarziel, das den IFF-Status "Freund" hat, nicht Gegenstand einer Überwachung durch das optische Bilderzeugungssystem (130) sein soll; und
- Entscheiden mit Hilfe der Entscheidungshilfeeinheit, dass ein Radarziel, das den IFF-Status "Unbekannt" hat, Gegenstand der Überwachung durch das optische Bilderzeugungssystem (130) sein soll.

8. Computersoftwareprodukt für die Umsetzung des Verfahrens nach Anspruch 7.

## Revendications

1. Système d'avionique comprenant un système de radar (110), (120) et un système de production d'image optique (130), (140), (150), un moniteur de radar et un moniteur d'image optique (150), ledit système de radar étant capable de suivre automatiquement une cible de radar, **caractérisé en ce que** ledit système d'avionique est pourvu d'une unité d'aide à la décision (190) ayant une connexion audit système de radar et audit système de production d'image optique (130), (140), (150), ladite unité d'aide à la décision (190) étant connectée à une unité d'entrée/sortie (195) pour entrer un ou plusieurs paramètres de décision, et dans lequel, pendant une mission de vol, ladite unité d'aide à la décision (190) est conçue pour recevoir un ou plusieurs paramètres de suivi automatique de radar du système de radar (120), utiliser lesdits paramètres de décision sur lesdits paramètres de suivi de radar pour décider quelles cibles de radar doivent être soumises à une observation par le système de production d'image optique (130), (140), (150), et dans lequel l'unité d'aide à la décision (190) est également connectée à une unité IFF (170), et **en ce que** ladite unité d'aide à la décision (190) est pourvue de moyens pour recevoir un état IFF pour au moins une cible de radar de ladite l'unité IFF (170), ladite unité d'aide à la décision (190) étant pourvue de moyens pour décider qu'une cible de radar ayant un état IFF « Friend » ne devrait pas être soumise à une observation par le système de production d'image optique, et ledit système d'aide à la décision (190) est pourvu de moyens pour décider qu'une cible de radar ayant un état IFF « Unknown » devrait être soumise à une observation par ledit système de production d'image optique.

2. Système d'avionique selon la revendication 1, **caractérisé en ce que** ladite unité d'aide à la décision est pourvue de moyens pour communiquer une valeur représentative d'une direction calculée d'une cible de radar au système de production d'image optique, ledit système de production d'image étant pourvu d'une caméra capable de tourner autour de deux axes mutuellement orthogonaux, et ledit système de production d'image optique est pourvu de moyens pour aligner la caméra dans la direction indiquée par ladite valeur représentative de ladite direction calculée.

3. Système d'avionique selon la revendication 2, **caractérisé en ce que** ladite unité d'aide à la décision est pourvue de moyens pour décider si une cible de radar se déplace.

4. Système d'avionique selon la revendication 3, **caractérisé en ce que** ladite unité d'aide à la décision comprend des moyens pour prédire au moins une position de cible en relation avec une vitesse de cible et une direction de cible.

5. Système d'avionique selon la revendication 4, **caractérisé en ce que** ledit système d'aide à la décision comprend des moyens pour générer et envoyer une commande de verrouillage au système de production d'image.

6. Système d'avionique selon l'une quelconque des revendications précédentes, **caractérisé en ce que** le système de production d'image est une nacelle de désignateur laser.

7. Procédé pour commander la direction d'observation d'un capteur électro-optique dans un système d'avionique comprenant un système de radar (110), (120) et un système de production d'image optique (130), (140), (150), un ordinateur central (160), un moniteur de radar et un moniteur d'image optique (150), ledit système de radar étant capable de suivre automatiquement une cible de radar, comprenant les étapes consistant à :
- effectuer une recherche (210) dans une mémoire de données d'objet de l'ordinateur central (160) pour voir (215) s'il y a des objets non identifiés dans la plage du capteur électro-optique (130) d'une nacelle de désignateur laser ;
- ordonner (220) au radar de se placer sur l'objet ;
- surveiller (225) les données de position et de vitesse concernant l'objet ;
- décider (230) quand lesdites données sont suffisamment bonnes, et diriger ensuite (235) la nacelle de désignateur laser dans la direction de l'objet ; et
- ordonner (240) à la nacelle de désignateur laser de suivre l'objet et montrer (245) l'image de l'objet suivi sur une surface de présentation,
dans lequel le procédé comprend également les étapes consistant à :
- recevoir un état IFF pour au moins une cible de radar d'une unité IFF (170) ;
- décider, en utilisant une unité d'aide à la décision (190) connectée à l'unité IFF (170), qu'une cible de radar ayant un état IFF « Friend » ne devrait pas être soumise à une observation par le système de production d'image optique (130) ;
- décider, en utilisant l'unité d'aide à la décision, qu'une cible de radar ayant un état IFF « Unknown » devrait être soumise à une observation par ledit système de production d'image optique (130).

8. Produit logiciel d'ordinateur pour réaliser le procédé selon la revendication 7.
